(19) Europäisches Patentamt
European Patent Office
Office européen des brevets

(11) Publication number: 0 052 961
B1

(12) EUROPEAN PATENT SPECIFICATION

(45) Date of publication of patent specification: 11.09.85

(51) Int. Cl.⁴: C 08 G 73/02, G 03 G 5/14, C 07 C 87/50

(21) Application number: 81305203.2

(22) Date of filing: 30.10.81

# (54) Amine polymers and imaging members containing amine polymers.

(30) Priority: 20.11.80 US 208620
20.11.80 US 208605

(43) Date of publication of application:
02.06.82 Bulletin 82/22

(45) Publication of the grant of the patent:
11.09.85 Bulletin 85/37

(84) Designated Contracting States:
DE GB

(56) References cited:
EP-A-0 029 703
EP-A-0 034 425
DE-A-2 557 398
US-A-3 265 496
US-A-4 078 925

(73) Proprietor: XEROX CORPORATION
Xerox Square - 020
Rochester New York 14644 (US)

(72) Inventor: Turner, Richard S.
312 Eileen Way
Bridgewater New Jersey 08807 (US)
Inventor: Yanus, John F.
924 Little Bardfield Road
Webster New York 14580 (US)
Inventor: Pai, Damodar M.
72 Shagbark Way
Fairport New York 14450 (US)

(74) Representative: Frain, Timothy John et al
c/o Rank Xerox Limited Patent Department
Rank Xerox House 338 Euston Road
London NW1 3BH (GB)

EP 0 052 961 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates in general to amine polymers, particularly aromatic arylamine polymers, and imaging members containing amine polymers.

The number of known organic reactions is tremendously large, e.g., note the size of an elementary organic textbook, yet the number of these reactions that lend themselves to the formation of usable polymeric materials via a step growth process is extremely small. The anomaly is readily understood by consideration of the factors necessary to obtain high molecular weight in a polymer forming step growth reaction. This has been described by the Carothers equation where the DP, degree of polymerization, is related to the reaction conversion, P, by $DP=1/1-P$. This equation says that reaction conversions have to be extremely high, greater than 95 percent, in order to obtain molecular weights high enough to impart any reasonable mechanical properties to the polymer. Very few of the numerous organic reactions known actually fit this criteria because of the presence of side reactions, etc.

The Ullman coupling and Ullman condensation reactions have been known for many years and, despite their usefulness as a synthetic tool, in most cases, these reactions have been unsuited for high polymer formation. An exception to this has been the formation of polyethers from aryl halides and the disodium salt of bisphenol A. This is at least partially due to the relative ease of alkoxide or aryloxide Ullman condensation with aryl halides in small molecule systems.

This is contrasted to the poor reactions of diaryl amines and aromatic halides to form triaryl amines. Work on the Ullman condensation of diaryl amines and aromatic iodides has resulted in Applicants developing a superior process for the preparation of triaryl amines. This process has been detailed in European Patent 0034425, filed 30.01.81. The results of this work has led to heretofore unknown aromatic amine polymer structures which are claimed herein.

In the art of more or less conventional xerography, a xerographic plate containing a photoconductive insulating layer is imaged by first uniformly electrostatically charging its surface. The plate is then exposed to a pattern of activating electromagnetic radiation such as light, which selectively dissipates charge in the illuminated areas of the photoconductive insulator resulting in a latent electrostatic image corresponding to the pattern of light-struck and nonlight-struck areas. The latent electrostatic image may then be developed to form a visible image by depositing finely divided electroscopic marking particles on the surface of the photoconductive insulating layer.

In recent years, interest has been shown in flexible electrophotographic plates for use in high speed office copying machines. Some of these plates are multilayered devices comprising, a conductive substrate, an adhesive blocking interface layer, a charge generation layer and a charge transport layer. The charge transport layer comprises an organic charge transport molecule dissolved or dispersed in a polymeric matrix material. This layer is substantially nonabsorbing in the spectral region of intended use, i.e., visible light, but is "active" in that it allows (1) injection of photogenerated charge from the charge generation layer and (2) efficient transport of these charges to the surface of the transport layer to discharge a surface charge thereon.

One of the parameters limiting the performance of these structures is the charge carrier mobility in the charge transport layer. When a structure such as this is employed in the above-described xerographic process, during the exposure step light is absorbed in the photogenerator layer creating free charge carriers. These charge carriers are then injected into and transported across the charge transport layer to the surface thereof. The charge carrier mobility or the velocity determines the time of transit across the transport layer. The maximum discharge of the light exposed area is obtained if the injected charge carrier has completely traversed the transport layer before the photoreceptor belt arrives at the development station. In materials with low charge carrier mobilities, the carrier will be part way through the charge transport layer when the photoreceptor belt arrives at the development station giving rise to less than maximum discharge of the photoreceptor.

Polymers that exhibit high charge carrier mobilities, when utilized in an electrophotographic imaging member comprising a charge generation layer and a charge transport layer, are relatively few in number. No polymer, to date, has exhibited the charge carrier mobilities exhibited by certain small molecules, such as, bis(4-diethylamino-2-methylphenyl)-phenyl methane dissolved in a matrix polymer. A practical hole transporting polymer, e.g. one having good electronic and mechanical properties, has been and continues to be a desirable alternative to the small molecule/polymer matrix composites now appearing in the patent literature. Issues such as long term phase compatibility would be eliminated in a system where the polymer per se is charge transporting.

The art is constantly searching for charge transport layers having high carrier mobility so that the time between exposure and development can be reduced without sacrificing xerographic efficiency. By reducing this time period, faster machines are possible.

U.S. Patent 3,265,496 is directed to a photoconductive material for use in electrophotography. This material includes a polytriphenyl amine polymer which is distinct from the polymers claimed in the compound claims of the instant application. There are disclosed polymers similar to those of the claimed imaging member but which are not employed as charge transport materials.

U.S. Patent 3,251,881 is directed to N,N,N'N',-tetrakis(p-substituted-phenyl)-p-phenylene diamines and benzidines. This patent does not include the polymers of the compound claims of the instant invention.

In U.S. Patent 4,078,925, there is disclosed classes of charge transport compounds which may be added to inactive polymeric matrix materials for use as a charge transport layer in an electrophotographic imaging member.

A polymer according to the present invention has the formula:

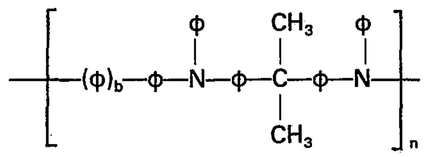

I

wherein $\phi$=phenyl or phenylene
b=0, 1, 2, 3
n=3 or greater.

Noninterfering substituents may be present on the phenyl or phenylene groups, for example $C_1$—$C_6$ alkyl groups, $C_1$—$C_6$ acyl or alkoxy groups, etc.

This invention also provides an imaging member characterised by a charge generation layer comprising a layer of photoconductive material which is capable of photogenerating and injecting photogenerated holes into a contiguous or adjacent polymeric charge transport layer, the charge transport layer comprising a polymer of the following general formula:

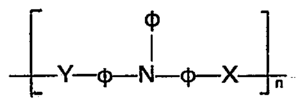

II

wherein

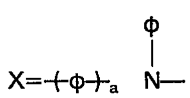

or

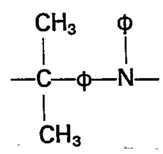

a=0,1
$Y=-(\phi)_b-$
b=0,1,2,3
$\phi$=phenyl or phenylene
n=3 or above.

The polymers in formulas I and II are prepared by reacting the appropriate diamine with the appropriate dihalide, e.g. diiodide, dichloride and dibromide. The reaction proceeds most effectively when the dihalide is the diiodide and the reaction is conducted in an inert atmosphere, e.g. argon, nitrogen, etc. with potassium hydroxide in the presence of powdered copper catalyst and an inert saturated hydrocarbon solvent or in the absence of a solvent and the reaction temperature is limited to between about 120—190°C.

The contemplated polymers within the scope of the above-identified formula I can be prepared by reacting 4,4'-idopropylidene bis(diphenylamine) with one or more of the following diiodo compounds:
4,4'-diiodobiphenyl;
1,4-diiodobenzene;
4,4''-diiodoterphenyl;
4,4'''-diiodoquatraphenyl; and
2,2-bis(4-iodophenyl) propane;
or by reacting bis[4-iodophenyl] isopropylidene with one or more of the following diamines:
N,N'-diphenyl-[1,1'-biphenyl]-4,4'-diamine;
N,N'-diphenyl-[phenylene]-1,4-diamine;
N,N'-diphenyl-[p,p''-terphenyl]-4,4''-diamine;
N,N'-diphenyl-[p,p'''-quatraphenyl]-4,4'''-diamine; and
4,4'-isopropylidene bis(diphenylamine).

The polymers of formula I will have chain lengths of at least three repeating units preferably with molecular weights ranging from about 5,000 to 70,000 or higher.

The contemplated polymers within the scope of the above-identified formula II can be prepared by reacting an appropriate diamine with an appropriate dihalide.

Examples of diamines include:
N,N'-diphenyl-[1,1'-biphenyl]-4,4'-diamine;

N,N'-diphenyl-[phenylene]-1,4-diamine;
N,N'-biphenyl-[p,p''-terphenyl]-4,4''-diamine;
N,N'-diphenyl-[p,p'''-quatraphenyl]-4,4'''-diamine; and
4,4'-isopropylidene bis(diphenylamine).

Examples of dihalides include:

4,4'-diiodobiphenyl;
1,4-diiodobenzene;
4,4''-diiodoterphenyl;
4,4'''-diiodoquatraphenyl; and
2,2-bis(4-iodophenyl)propane.

The starting materials can have the usual noninterfering substituents on the aryl groups of the starting materials e.g. lower alkyl, groups like methyl, ethyl, propyl, butyl, etc.; $C_1$—$C_6$ acyl groups; $C_1$—$C_6$ alkoxy groups, etc. The polymers can also be formed from two or more diamine precursors and two or more dihalo precursors. It will be found that the polymer of the present invention will have chain lengths of at least three repeating units preferably with molecular weights ranging from 5,000 to 70,000 and higher. Normally, the subject polymers can be employed without the use of a binder, however, commercially available plasticizers can be included therein to enhance the mechanical properties.

The drawing is a schematic illustration of an imaging member according to the invention which comprises a photoreceptor having a charge generation layer overcoated with a polymeric charge transport layer.

Referring to the drawing, reference character 30 designates an imaging member which comprises a supporting substrate 11 having a charge generation layer 12 thereon. Substrate 11 is preferably comprised of any suitable conductive material. Typical conductors comprise aluminum, steel, nickel, brass or the like. The substrate may be rigid or flexible and of any convenient thickness. Typical substrates include flexible belts of sleeves, sheets, webs, plates, cylinders and drums. The substrate or support may also comprise a composite structure such as a thin conductive coating contained on a paper base; a plastic coated with a thin conductive layer such as aluminum, nickel or copper iodide; or glass coated with a thin conductive coating of chromium or tin oxide.

In addition, if desired, an electrically insulating substrate may be used. In this case, an electric charge, equivalent to a conductive layer, may be placed upon the insulating member by double corona charging techniques well known and disclosed in the art. Other modifications using an insulating substrate or no substrate at all include placing the imaging member on a conductive backing member or plate in charging the surface while in contact with said backing member. Subsequent to imaging, the imaging member may then be stripped from the conductive backing.

Generator layer 12 contains photoconductive particles dispersed randomly without orientation in binder 14. Binder material 14 may comprise any electrically insulating resin such as those disclosed in Middleton et al, U.S. Patent 3,121,006. Specific examples are polystyrene, acrylic and methacrylic ester polymers, polyvinylchlorides, etc. When using an electrically inactive or insulating resin, it is essential that there be particle-to-particle contact between the photoconductive particles. This necessitates that the photoconductive material be present in an amount of at least 10 percent by volume of the binder layer with no limit on the maximum amount of photoconductor in the binder layer. If the matrix or binder comprises an active material, e.g. poly-N-vinylcarbazole, the photoconductive material need only comprise about 1 percent or less by volume of the binder layer with no limit on the maximum amount of photoconductor in the binder-layer. The thickness of binder layer 12 is not critical. Layer thickness from about 0.05 to 40.0 mμ have been found to be satisfactory.

The photoconductor particles 13 may be any material capable of photogenerating holes and injecting photogenerated holes into the contiguous charge transport layer 15. Any suitable inorganic or organic photoconductor and mixtures thereof may be employed. Inorganic materials include inorganic crystalline photoconductive compounds and inorganic photoconductive glasses. Typical inorganic compounds include cadmium sulfoselenide, cadmium selenide, cadmium sulfide and mixtures thereof. Typical inorganic photoconductive glasses include amorphous selenium and selenium alloys such as selenium-tellurium, selenium-tellurium-arsenic and selenium-arsenic and mixtures thereof. Selenium may also be used in a crystalline form known as trigonal selenium. Typical organic photoconductive materials which may be used as charge generators include phthalocyanine pigment such as the X-form of metal free phthalocyanine described in U.S. Patent 3,357,989 to Byrne et al; metal phthalocyanines such as copper phthalocyanine; quinacridones available from duPont under the tradename Monastral Red, Monastral Violet and Monastral Red Y; substituted 2,4-diaminotriazines disclosed by Weinberger in U.S. Patent 3,445,227; triphenodioxazines disclosed by Weinberger in U.S. Patent 3,442,781; polynuclear aromatic quinacridones available from Allied Chemical Corporation under the tradename Indo Double Scarlet, Indofast Violet Lake B, Indofast Brilliant Scarlet and Indofast Orange. The photoconductive particles may be present in the generator layer in from 0.5 to about 95 percent by volume depending upon the character of the binder material.

It is to be understood that the generator layer need not be dispersed photoconductive particles in a resin binder, but can be a homogeneous layer, such as, amorphous selenium, selenium alloys, e.g.

selenium-tellurium-arsenic alloys and, in fact, any other charge generating photoconductive material which can withstand a minimum flexing stress required in a flexible photoreceptor.

Active layer 15 comprises the substantially transparent or fully transparent electrically active polymer of the present invention. In general, the thickness of polymer layer 15 is from about 5 to 100 µm, but thicknesses outside this range can also be used.

Active layer 15 is substantially nonabsorbing to light in the wavelength region employed to generate holes in the photoconductive layer. This preferred range for xerographic utility is from about 400 to about 800 nm. In addition, the photoconductor should be responsive to all wavelengths from 400 to 800 nm if panchromatic responses are required. All photoconductor-active material combinations of the instant invention shall result in the injection and subsequent transport of holes across the physical interface between the photoconductor and the polymer active material. Transport layer 15 is contiguous with respect to the charge generator layer 12 in that they are in contact. It is contemplated that the substrate can be adjacent and/or contiguous either the transport layer or the generator layer.

The following examples further specifically define the present invention with respect to the method of making the polymers and the photosensitive member utilizing the same. The percentages are by weight unless otherwise indicated.

Example I

This example details the preparation of the polymer resulting from the condensation of 4,4'-isopropylidene bis(diphenylamine) and 4,4'-diiodobiphenyl.

In a 100 ml, three-necked round bottom flask equipped with a mechanical stirrer and purged with argon were placed 9.3 grams (0.025 mole) of 4,4'-isopropylidene bis(diphenylamine), 16.9 grams (0.3 mole) of potassium hydroxide flakes, 7.5 grams of copper powder and 25 mls of tetrahydronaphthalene. With the aid of an oil bath, the mixture was heated to 170°C with stirring for one hour. The 4,4'-diiodobiphenyl, in the amount of 10.3 grams (0.025 mole), was added and the heterogeneous mixture allowed to stir for 18 hours. The reaction was cooled and 25 mls of tetrahydrofuran was added and brought to reflux. The liquid portion was decanted and the tetrahydrofuran reflux wash was repeated three times. The resulting solution was filtered and a fine yellow precipitate was formed upon addition to one liter of ethanol. The precipitate was dissolved in toluene and precipitated into acetone. This toluene-acetone sequence was repeated. The product was again dissolved in toluene and column chromatographed on Florisil, i.e. a magnesium silicate. The colorless eluent was precipitated into ethanol and dried to yield (65%) of a colorless powder. This polymer had an $\overline{M}n$ of 10,000 and an $\overline{M}w$ of greater than 20,000 as determined from a gel permeation chromatography analysis and vapor phase osmmometry.

Example II

This example details the preparation of the polymer resulting from the condensation of 2,2-bis(4-iodophenyl)propane and N,N'-diphenyl[phenylene]-1,4-diamine.

Using the same process as Example I, 6.5 grams (.025 mole) of N,N'-diphenyl-[phenylene]-1,4-diamine, 16.9 grams (0.3 mole) of potassium hydroxide flakes, 7.5 grams of copper powder and 25 mls of tetrahydronaphthalene are combined and heated to 170°C with stirring for one hour. The 2,2-bis(4-iodophenyl)propane, in the amount of 11.1 grams (.025 mole), is added and the heterogeneous mixture stirred for 18 hours. The reaction is cooled and 25 mls of tetrahydrofuran added and brought to reflux. The liquid portion is decanted and the tetrahydrofuran reflux was repeated three times. The resulting solution is filtered and a precipitate is formed on addition of a liter of ethanol. The precipitate is dissolved in toluene and precipitated into acetone. This purification sequence is repeated and a toluene solution of the precipitate is column chromatographed on Florisil, i.e. a magnesium silicate. The eluent is precipitated into ethanol and the precipitated polymer is isolated and dried.

Example III

An electrophotographic plate was prepared employing the polymer of Example I as the charge transport layer.

A 0.5 µm thick charge generator layer of amorphous selenium was vapor deposited on a 76 µm aluminum substrate. Prior to evaporating the amorphous selenium on the substrate, a 0.5 µm layer of an epoxy phenolic barrier layer was formed over the aluminum by dip coating. A 5 µm thick transport layer of the polymer of Example I was coated onto the selenium layer from a solution of the polymer in tetrahydrofuran. The device was evacuated overnight at room temperature. A time resolved xerographic discharge shape shows that the device instantly discharges to zero without any residuals present when the negatively charged device is exposed to a flash source of 2 µT/$cm^2$ light intensity. This device was employed to make excellent reproductions on a Xerox Model D copier. The hole mobility of the polymeric transport layers of this Example is greater than $3\times10^{-5}$ cm2/volt second. In the low field region of interest in xerography, this is 300 times higher than that measured in poly-N-vinylcarbazole. Incidentally, poly-N-vinylcarbazole represents the present state of the art.

Example IV

This example details the preparation of the polymer resulting from the condensation of N,N'-diphenyl-[1,1'-biphenyl]-4,4'-diamine and 1,4-diidobenzene.

In a 100 ml, three-necked round bottom flask equipped with a mechanical stirrer and purged with argon is placed 3.36 grams (0.01 mole) of N,N'-diphenyl-[1,1'-biphenyl]-4,4'-diamine, 4.5 grams of potassium hydroxide flakes, 3.0 grams of copper powder, 30 mls of tetrahydronaphthalene. With the aid of an oil bath, the mixture is heated to 150°C for one hour. The 1,4-diiodobenzene, in the amount of 3.29 grams (0.01 mole), is added and the heterogeneous mixture is stirred at 150°C for 3—4 hours. The mixture is filtered while hot. 25 mls of tetrahydrofuran is added and brought to reflux. The tetrahydrofuran reflux wash is repeated three times. The resulting solution is filtered and a precipitate formed by the addition of a liter of methanol. The precipitate is isolated and purified to a yield of 4.0 grams of the polymer.

Example VI

Employing the same technique and materials as in Example III, except that the polymer of Example IV is used as the charge transport layer, an electrophotographic plate is prepared. As in Example III, a time resolved xerographic discharge shape shows that the device instantly discharges to zero without any residual when the negatively charged device is exposed to a flash source of 2 μT/cm$^2$ light intensity.

**Claims**

1. A polymer of the formula

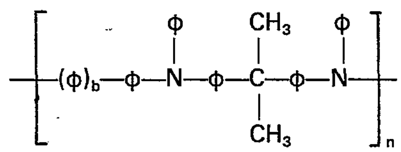

wherein φ=phenyl or phenylene
b=0, 1, 2 or 3
n=3 or greater.

2. A polymer according to Claim 1 resulting from the condensation of bis[4-iodophenyl]isopropylidene with one or more of the following diamines:
N,N'-diphenyl-[1,'-biphenyl]-4,4'-diamine;
N,N'-diphenyl-[phenylene]-1,4-diamine;
N,N'-diphenyl-[p,p''-terphenyl]-4,4''-diamine;
N,N'-diphenyl-[p,p'''-quatraphenyl]-4,4'''-diamine; and
4,4'-isopropylidene bis(diphenylamine)
or from the condensation of 4,4'-iodopropylidene bis(diphenylamine) with one or more of the following diiodo compounds:
4,4'-diiodobiphenyl;
1,4-diiodobenzene;
4,4''-diiodoterphenyl;
4,4'''-diiodoquatraphenyl; and
2,2'-bis(4-iodophenyl)propane.

3. An imaging mamber (30), comprising a charge generation layer (12) comprising a layer (13) of photoconductive material and a contiguous charge transport layer (15) said charge transport layer characterised in that it comprises as charge transport carrier a polymer of the formula:

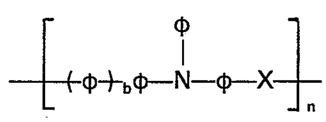

wherein

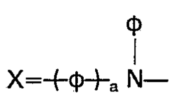

or

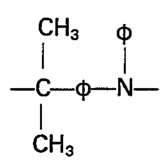

a=0, 1
b=0, 1, 2, 3
φ=phenyl or phenylene
n=3 or above

said photoconductive layer (13) exhibiting the capability of photogeneration of holes and injection of said holes and said charge transport layer (15) being substantially nonabsorbing in the spectral region at which the photoconductive layer generates and injects photogenerated holes but being capable of supporting the injection of said holes and transporting said holes through said charge transport layer (15).

4. An imaging member according to claim 3 wherein said polymer results from the condensation of one or more diamine precursors and one or more dihalo precursors.

5. An imaging member according to claim 4 wherein said diamine precursor is selected from the group consisting of:

N,N′-diphenyl-[1,1′-biphenyl]-4,4′-diamine;
N,N′-diphenyl-[phenylene]-1,4-diamine;
N,N′-diphenyl-[p,p″-terphenyl]-4,4″-diamine;
N,N′-diphenyl-[p,p‴-quatraphenyl]-4,4‴-diamine; and
4,4′-isopropylidene bis(diphenylamine)

and said dihalo precursor is selected from the group consisting of:

4,4′-diiodobiphenyl;
1,4-diiodobenzene;
4,4″-diiodoterphenyl;
4,4‴-diiodoquatraphenyl; and
2,2-bis(4-iodophenyl) propane.

6. An imaging member according to claim 5 wherein said diamine precursor is 4,4′-isopropylidene bis(diphenylamine) and said dihalo precursor is 4,4′-diiodobiphenyl.

7. An imaging member according to claim 5 wherein said diamine precursor is N,N′-diphenyl[1,1′-biphenyl]-4,4′-diamine and said dihalo precursor is 1,4-diiodobenzene.

8. An imaging member according to claim 5 wherein said diamine precursor is N,N′-diphenyl-[1,1′-biphenyl]-4,4′-diamine and said dihalo precursor is 4,4′-diiodobiphenyl.

**Patentansprüche**

1. Polymer der Formel

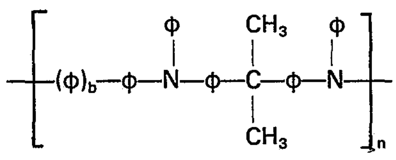

worin

ϕ=Phenyl oder Phenylen
b=0, 1, 2 oder 3
n=3 oder größer.

2. Polymer nach Anspruch 1, erhalten aus der Kondensation von Bis(4-jodphenyl)isopropyliden mit einem oder mehreren der folgenden Diamine:

N,N′-Diphenyl-(1,1′-biphenyl)-4,4′-diamin;
N,N′-Diphenyl-(phenylen)-1,4-diamin;
N,N′-Diphenyl-(p,p″-terphenyl)-4,4″-diamin;
N,N′-Diphenyl-(p,p‴-quatraphenyl)-4,4‴-diamin; und
4,4′-Isopropyliden-bis(diphenylamin)

oder aus der Kondensation von 4,4′-Jodpropyliden-bis(diphenylamin) mit einem oder mehreren der folgenden Dijodverbindungen:

4,4′-Dijodbiphenyl;
1,4-Dijodbenzol;
4,4″-Dijodterphenyl;
4,4‴-Dijodquatraphenyl; und
2,2′-Bis(4-jodphenyl)propan.

3. Abbildungsteil (30), umfassend eine Ladungserzeugungsschicht (12), umfassend eine Schicht (13) eines photoleitenden Materials und eine benachbarte Ladungstransportschicht (15), wobei die Ladungstransportschicht dadurch gekennzeichnet ist, daß sie als Ladungstransportträger ein Polymer der Formel

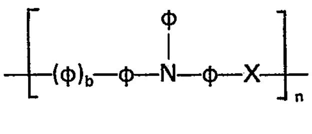

umfaßt,
worin

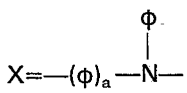 oder 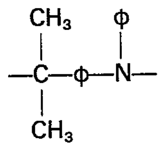

a=0, 1
b=0, 1, 2, 3
φ=Phenyl oder Phenylen
n=3 oder größer

wobei die photoleitende Schicht (13) die Fähigkeit zur Photoerzeugung von Löchern und zur Injektion der Löcher zeigt und die Ladungstransportschicht (15) weitgehend nicht absorbierend in dem spektralen Bereich ist, bei dem die photoleitende Schicht löcher erzeugt und die photoerzeugten Löcher injiziert, jedoch in der Lage ist, die Injektion der Löcher zu unterstützen und die Löcher durch die Ladungstransportschicht (15) zu transportieren.

4. Abbildungsteil nach Anspruch 3, worin das Polymer aus der Kondensation eines oder mehrerer Diaminvorläufer und eines oder mehrerer Dihalovorläufer erhalten wird.

5. Abbildungsteil nach Anspruch 4, worin der Diaminvorläufer gewählt wird aus der Gruppe, bestehend aus:

N,N'-Diphenyl-(1,1'-biphenyl)-4,4'-diamin;
N,N'-Diphenyl-(phenylen)-1,4-diamin;
N,N'-Diphenyl-(p,p''-terphenyl)-4,4''-diamin;
N,N'-Diphenyl-(p,p'''-quatraphenyl)-4,4'''-diamin; und
4,4'-lsopropyliden bis(diphenylamin)

und der Dihalovorläufer gewählt wird aus der Gruppe, bestehend aus

4,4'-Dijodbiphenyl;
1,4-Dijodbenzol;
4,4''-Dijodterphenyl;
4,4'''-Dijodquatraphenyl; und
2,2-Bis(4-jodphenyl)propan.

6. Abbildungsteil nach Anspruch 5, worin der Diaminvorläufer 4,4'-lsopropyliden bis(diphenylamin) und der Dihalovorläufer 4,4'-Dijodbiphenyl ist.

7. Abbildungsteil nach Anspruch 5, worin der Diaminvorläufer N,N'-Diphenyl-(1,1'-biphenyl)-4,4'-diamin und der Dihalovorläufer 1,4-Dijodbenzol ist.

8. Abbildungsteil nach Anspruch 5, worin der Diaminvorläufer N,N'-Diphenyl-(1,1'-biphenyl)-4,4'-diamin und der Dihalovorläufer 4,4'-Dijodbiphenyl ist.

**Revendications**

1. Polymère ayant la formule:

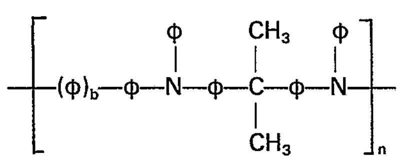

où φ=phényle ou phénylène
b=0, 1, 2 ou 3
n=3 ou plus.

2. Polymère selon la revendication 1, résultant de la condensation du bis[4-iodophényl]isopropylidène avec une ou plusieurs des diamines suivantes:

la N,N'-diphényl-[1,1'-biphényl]-4,4'-diamine;
la N,N'-diphényl-[phénylène]-1,4-diamine;
la N,N'-diphényl-[p,p''-terphényl]-4,4''-diamine;
la N,N'-diphényl-[p,p'''-quaterphényl]-4,4'''-diamine; et
la 4,4'-isopropylidène bis(diphénylamine)

ou résultant de la condensation de la 4,4'-iodopropylidènebis(diphénylamine) avec un ou plusieurs des composés diiodés suivants:

le 4,4'-diiodobiphényle;
le 1,4-diiodobenzène;
le 4,4''-diiodoterphényle;

le 4,4'''-diiodoquaterphényle et
le 2,2'-bis(4-iodophényl)propane.

3. Elément de formation d'images (30) comprenant une couche (12) de production de charges comportant une couche (13) de matière photoconductrice et une couche contiguë (15) de transport de charges, cette couche de transport de charges étant caractérisée en ce qu'elle comprend, en tant que porteur pour le transport de charges, un polymère ayant la formule:

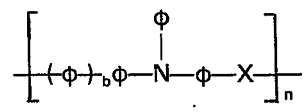

où

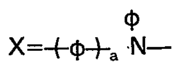

ou

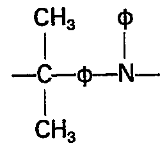

a=0, 1
b=0, 1, 2, 3
ɸ=phényle ou phénylène
n=3 ou au-dessus

cette couche photoconductrice (13) présentant l'aptitude à la photogénération de trous et à l'injection de trous et la couche (15) de transport de charged étant sensiblement non absorbante dans la région spectrale à laquelle la couche photoconductrice produit et injecte des trous photogéneres mais étant capable de supporter l'injection de ces trous et de transporter ces trous à travers la couche (15) de transport de charges.

4. Elément de formation d'images selon la revendication 3, dans lequel le polymère résulte de la condensation d'un ou de plusieurs précurseurs diaminés et d'un ou de plusieurs précurseurs dihalogénés.

5. Elément de formation d'images selon la revendication 4, dans lequel le précurseur diaminé est choisi dans le groupe se composant de:
la N,N'-diphényl-[1,1'-biphényl]-4,4'-diamine;
la N,N'-diphényl-[phénylène]-1,4-diamine;
la N,N'-diphényl-[p,p''-terphényl]-4,4''-diamine;
la N,N'-diphényl-[p,p'''-quaterphényl]-4,4'''-diamine et
la 4,4'-isopropylidène bis(diphénylamine)
et le précurseur dihalogéné est choisi dans le groupe se composant de:
le 4,4'-diiodobiphényle;
le 1,4-diiodobenzène;
le 4,4''-diiodoterphényle;
le 4,4'''-diiodoquaterphényle; et
le 2,2-bis(4-iodophényl)propane.

5. Elément de formation d'images selon la revendication 5, dans lequel le précurseur diaminè est la 4,4'-isopropylidènebis(diphénylamine) et le précurseur dihalogéné est le 4,4'-diiodobiphényle.

7. Elément de formation d'images selon la revendication 5, dans lequel le précurseur diaminé est la N,N'-diphényl[1,1'-biphényl]-4,4'-diamine et le précurseur dihalogéné est le 1,4-diiodobenzène.

8. Elément de formation d'images selon la revendication 5, dans lequel le précurseur diaminé est la N,N'-diphényl-[1,1'-biphényl]-4,4'-diamine et le précurseur dihalo;éné est le 4,4'-diiodobiphényle.

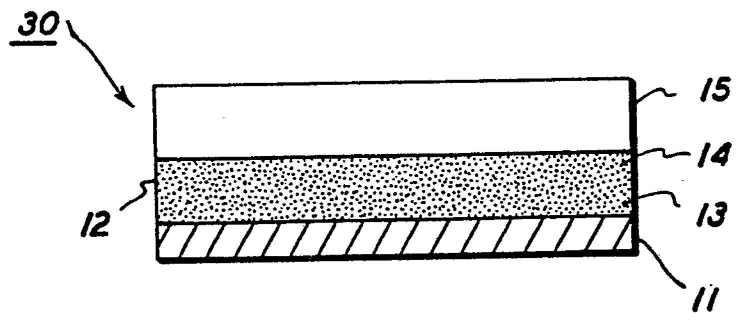
30
15
14
13
12
11